# EUROPEAN PATENT SPECIFICATION

(11) **EP 1 104 377 B1**
(45) Date of publication and mention of the grant of the patent: **23.04.2003**
(21) Application number: 98945674.4
(22) Date of filing: 20.08.1998
(51) Int. Cl.: B62B 9/00

(54) **STANDING BOARD FOR BUGGIES, PUSH-CHAIRS AND PRAMS**
FUSSPLATTFORM FÜR KINDERWAGEN
ACCESSOIRE POUR POUSSETTE-CANNE, POUSSETTE ET LANDAU PERMETTANT DE TRANSPORTER UN ENFANT DEBOUT

(43) Date of publication of application: 06.06.2001
(73) Proprietor: LUNDH, Jöran, 561 92 Huskvarna (SE)
(72) Inventor: LUNDH, Jöran, 561 92 Huskvarna (SE)
(74) Representative: Arwidi, Bengt Dr.
(86) International application number: PCT/SE98/01495
(87) International publication number: WO 00/010861

(56) References cited:
- WO-A1-93/22179
- DE-C- 97 662
- DE-U1- 29 722 147

## Description

The present invention is for standing boards for prams and buggies made that the standing board may be connected to prams and buggies which are without a rear shaft or are so designed that connecting the standing board to the rear shaft not always is suitable.

Standing boards for prams are intended to be connected to the pram to make it possible for brother and sisters or other older children to come along standing on the board. It is usually equipped to be connected to the rear shaft of the pram and the child stands between the carriage body and the handle of the pram. It is also possible to make use of the standing board for transportation of goods and similar purposes. The board is carried by a mounting at the rear shaft and by two wheels which are placed close to the rear end of the board. The wheels of the board are so arranged that they may turn around a vertical shaft. However, some kinds of prams or buggies are so made that the board cannot be connected to the wheel shaft, either because it is not within reach or because it is missing at carriages at which the wheels are mounted on short, individual shafts or shaft ends.

Documents DE 295 06 009 U, DE 297 19 064 U and DE 976 62 A show standing boards for prams according to the preamble of claim 1.

The object of the present invention is a standing board which may be connected to a pram or buggy without making use of the rear wheel shaft of the pram or buggy. It is another object to obtain a connection which gives stability without risk that the carriage and the board will tilt over. A further object is to achieve a connection which may be adapted to various designs of the carriage.

This is achieved by providing a standing board according to claim 1.

The invention will below be described more in detail with reference to the embodiments which are shown in the enclosed figures.

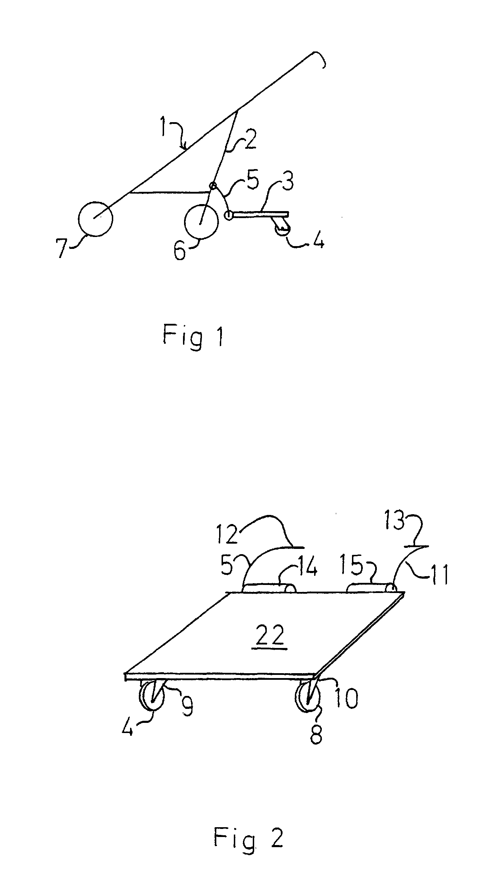

Figure 1 shows a buggy with a standing board according to the invention.
Figure 2 shows a standing board according to the invention.

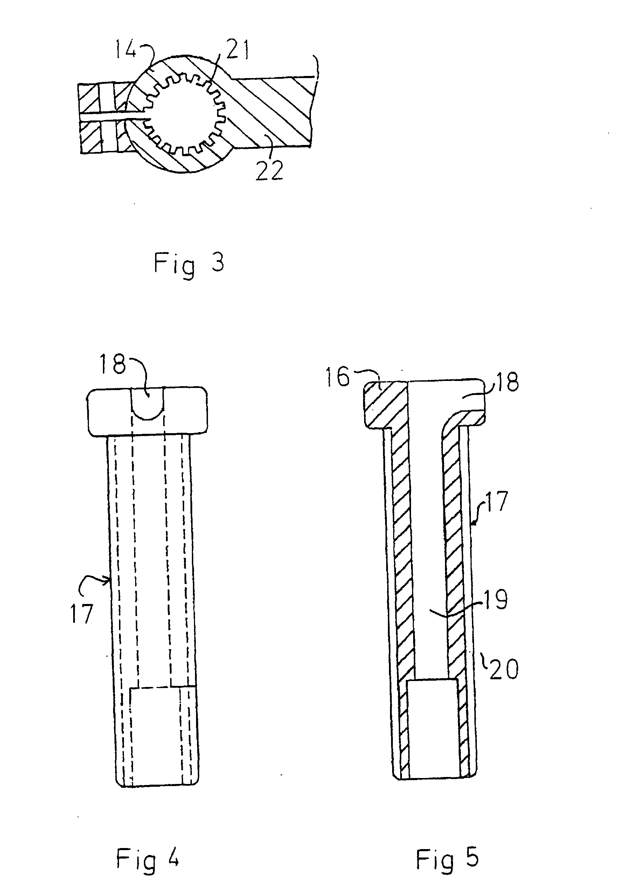

Figure 3 shows a mounting bracket of the board.
Figures 4 and 5 show a mounting bushing of the mounting means

The standing board is mounted to a buggy 1. The buggy is of a design such that the standing board can not be mounted to rear shaft, if any, of the buggy but mounting of the standing board has to be to the frame of the buggy 1, for example at a rear member 2. This member may be so designed that it extends itself mainly straight from the handle of the buggy down to its rear wheel. The buggy may be of a foldable design without a common shaft for the rear wheels. The standing board 3 has a board 22, wheels 4, 8 at the rear end of the board and two mounting arms 5, 11 which connect the standing board with the buggy. The wheels are carried by wheel forks 9, 10 which are pivotably mounted to the board 22. One end of the mounting arms 5, 11 is mounted to the standing board and the other end is mounted to the member 2 of the buggy and the corresponding member on the other side of the buggy. The mounting arms are so designed that there is free space for the wheels of the buggy, possible breaking means and other things, because of this the mounting arms are bent to circle bows and extend themselves forwards and upwards from the board. It has also be found to be essential that horizontal turning between the buggy and the standing board when passing across kerbs and other bumps is at the member 2 of the buggy and not at the mounting at the board 22 of the standing board. The reason for this is that if pivoting may occur too close to the board this may bring with it that the buggy and the board are tilted towards each other if the boar is loaded or exposed to short term downwardly directed forces. Pivoting may therefor take place around the shaft ends 12 and 13 at the outer ends of the mounting arms at the buggy.

Depending upon the size and design of the buggy the mounting at the member 2 and corresponding parts at different ways and levels. The mounting thus is done with a mounting means which is adapted to the buggy and is mounted to the member in any suitable way and which has holes to receive the shaft ends 12 and 13.

The mounting of the mounting arms 5 and 11 at the standing board according to the invention is so made that the arms take one of several determined positions relative to the board and when in use are fixedly arranged relative to the board. For this purpose the arms are mounted in bushings 17 which in turn are mounted in fastening parts 14, 15 which preferably are integrated parts of the board 2 of the standing board. The bushings 17 have a hole 19 for the insertion of the horizontal parts 23 of the mounting arms and the corresponding. These bend off at right angle to the circular shaped part of the mounting arm and are held at their fixed position at the bushing 17 by passing through the cut-out 18. The mounting arm is resiliently mounted in the bushing by means of a spring which is adapted at the outer end of the arm and which forces the arm inwards into the bushing so the arm is kept in the cut-out 18 (the spring means is not shown in the figures). When the standing board shall be released from the buggy the arms may be pulled sidewise outwards so that the distance between the arms is increased and the upper shaft ends 12, 13 are released from the mounting means at the buggy. The arms may then be turned so that the shaft ends are in contact with the underside of the board 22 and the board which is not in use takes as small space as possible.

The bushings 17 have a number of ridges 20 on their outside, preferably evenly distributed around the circumference of the bushing. In the mounting means 14, 15 at the standing board there is a hole corresponding to a bushing having grooves 21 corresponding to the ridges on the outside of the bushing. The bushings may so be turned to a position which corresponds to a horizontal standing board when the upper shaft ends 12, 13 of the mounting arms are inserted into the mounting means which are mounted to the buggy. The bushings may in a known manner be clamped thereby that the mounting parts 14, 15 are slit and damped around the inserted bushing. When the bushing is correctly mounted its head 16 with the groove 18 is at the outside of the mounting parts 14, 15 while the rest of the bushing is more or less pushed into the mounting parts 14, 15. In this way the distance between the mounting arms may be varied and adapted to the width of the buggy with which the standing board will be used.

The shape of the mounting arms may be adapted to various kinds of buggies and the mounting mans at the buggy may be made in different ways. It is of course also possible to make use of standing boards according to the invention with prams and buggies which have a rear wheel shaft and to mount the mounting means for the mounting arms at the rear shaft. Ridges and grooves at the bushings and the mounting parts of the standing board may also be varied as may the means for fixing of the bushings in the mounting parts.

## Claims

1. Standing board (3) for buggies and prams mounted to the frame (2) of the buggy/pram by means of mounting arms (5, 11) which extend themselves forwards and possibly upwards from the board (22) of the standing board and which are pivotably mounted to the frame (2) and when in use are fixedly arranged at the standing board (3) **characterized in that** the ends (23) of the mounting arms are inserted into bushings (17) which in turn are mounted to the standing board.

2. Standing board according to claim 1 **characterized in that** the bushings have outside ridges (20) which are inserted into corresponding grooves (21) in the mounting parts (14, 15) of the standing board in order to prevent the bushings from turning around.

3. Standing board according to claim 2 **characterized in that** the arms (5, 11) are spring loaded mounted into the bushings so that they may be pulled apart to make it possible to release the shaft ends (12, 13) of the arms from mountings at the frame (2) of the buggy.

4. Standing board according to any of the claims 2-3 **characterized in that** the mounting parts (14, 15) of the standing board have means for mounting of the bushings (17) at a variable distance from each other.

## Patentansprüche

1. Stehbrett (3) für Buggys und Kinderwagen, befestigt am Rahmen (2) des Buggys/Kinderwagens mittels Befestigungsarmen (5, 11), die sich nach vorne und möglicherweise auch nach oben vom Brett (22) des Stehbretts erstrecken und am Rahmen (2) drehbar montiert und bei Verwendung fest im Stehbrett (3) angeordnet sind, ***dadurch gekennzeichnet,* dass** die Enden (23) der Befestigungsarme in Spannhülsen (17) eingesteckt sind, die ihrerseits am Stehbrett angebracht sind.

2. Stehbrett nach Anspruch 1, ***dadurch gekennzeichnet,* dass** die Spannhülsen außen Rippen (20) aufweisen, die in entsprechende Rillen (21) in den Befestigungsteilen (14, 15) des Stehbretts eingeführt sind, um zu verhindern, dass sich die Spannhülsen drehen.

3. Stehbrett nach Anspruch 2, ***dadurch gekennzeichnet,* dass** die Arme (5, 11) in den Spannhülsen federnd angebracht sind, damit sie sich auseinander ziehen lassen, um zu ermöglichen, dass die Achszapfen (12, 13) der Arme aus den Befestigungen am Rahmen (2) des Buggys freigegeben werden können.

4. Stehbrett nach einem der Ansprüche 2-3, ***dadurch gekennzeichnet*, dass** die Befestigungsteile (14, 15) des Stehbretts Vorrichtungen zur Befestigung der Spannhülsen (17) in variablem Abstand von einander aufweisen.

## Revendications

1. Plateau (3) servant à transporter un enfant debout pour des poussettes-cannes et des landaus, monté sur le cadre (2) de la poussette-canne/du landau au moyen de bras de support (5, 11) qui s'étendent vers l'avant et éventuellement vers le haut à partir de la plateforme (22) du plateau et qui sont montés de manière à pouvoir pivoter sur le cadre (2) et, en cours d'utilisation, qui sont disposés de façon fixe sur le plateau (3), **caractérisé en ce que** les extrémités (23) des bras de montage sont installées dans des douilles (17), qui à leur tour sont montées sur le plateau.

2. Plateau selon la revendication 1, **caractérisé en ce que** les douilles comportent des nervures extérieures (20), qui sont insérées dans des rainures correspondantes (21) formées dans les parties de montage (14, 15) du plateau, de manière à empêcher une rotation des douilles.

3. Plateau selon la revendication 2, **caractérisé en ce que** les bras (5, 11) sont montés, en étant comprimés par des ressorts, dans les douilles de telle sorte qu'ils peuvent être écartés de manière à permettre la libération des extrémités en forme de tiges (12, 13) des bras de supports situés sur le cadre (2) de la poussette-canne.

4. Plateau selon l'une quelconque des revendications 2 et 3, **caractérisé en ce que** les parties de montage (14, 15) du plateau comportent des moyens pour monter les douilles (17) à une distance variable l'une de l'autre.
